Europäisches Patentamt

European Patent Office

Office européen des brevets

(11) Publication number: **0 260 004**
**A2**

# EUROPEAN PATENT APPLICATION

(21) Application number: **87307418.1**

(22) Date of filing: **21.08.87**

(51) Int. Cl.⁴: **C08L 23/04** , C08L 27/12 ,
C08L 83/04 ,
//(C08L23/04,27:12,83:04)

(30) Priority: **29.08.86 US 901699**

(43) Date of publication of application:
**16.03.88 Bulletin 88/11**

(84) Designated Contracting States:
**AT BE DE FR GB IT NL SE**

(71) Applicant: **MOBIL OIL CORPORATION**
**150 East 42nd Street**
**New York New York 10017(US)**

(72) Inventor: **Chu, Shaw Chang**
**107 Monroe Avenue**
**Belle Mead New Jersey 08502(US)**

(74) Representative: **Colmer, Stephen Gary**
**Patent Department c/o Mobil Services**
**Company Limited Mobil Court 3 Clements**
**Inn**
**London WC2A 2EB(GB)**

(54) Extrudable blends of polyethylene with siloxanes and films thereof.

(57) The extrudability of linear polymers of ethylene such as low density copolymers of ethylene and $C_4$ to $C_{10}$ olefins (LLDPE) into films is improved by adding small amounts, for example from 250 to 1000 ppm of each of a fluorocarbon polymer, such as polyvinylidene fluoride, and of a polyalkylsiloxane, such as poly(methyl octyl siloxane), to reduce melt fracture, head pressure and extruder power.

EP 0 260 004 A2

# EXTRUDABLE BLENDS OF POLYETHYLENE WITH SILOXANES AND FILMS THEREOF

This invention relates to extrudable blends of polyethylene. More particularly, this invention relates to extrudable blends of linear ethylene polymers with polysiloxanes; to processes for extruding them; and to films comprising them.

Linear ethylene polymers such as linear low density polyethylenes (LLDPE) enjoy widespread use, extruded as films, because of their superior properties compared with high pressure polyethylene (LDPE). However, the commercial exploitation of LLDPE is hampered by problems of extrusion: for example, high back pressure and torque are encountered because of the extremely high shear viscosity of the linear ethylene polymer. Furthermore, the extruded films exhibit surface distortion related to melt fracture. Accordingly, much effort has been devoted to finding additives, modifying extrusion conditions and changing die materials in order to alleviate some of these extrusion problems.

This invention seeks to provide a blend of the linear ethylene polymers with a mixture of additives which improves the extrusion characteristics of the linear ethylene polymers by reducing melt fracture, head pressure and the power invested in extruding

This invention provides a composition which comprises (i) a linear ethylene polymer; (ii) a fluorocarbon polymer, having a fluorine to carbon atomic ratio of at least 1:2, which is fluid at a temperature from 120°C to 300°C; and (iii) a polyalkylsiloxane consisting of a major portion of methyl higher alkyl siloxane units and a minor proportion, if any, of other siloxane units.

The linear ethylene polymers (i) which are suitable for use in this invention are known materials which are widely commercially available. The preparation of suitable polymers is described in U.S. Patent 4,076,698. Suitable polymers (i) are generally prepared under low pressure conditions using Ziegler-Natta catalysts or chromium oxide catalysts. The linear polymers (i) are suitably either homopolymers of ethylene or copolymers of ethylene and higher olefins. This invention is particularly concerned with linear low density polyethylenes which are copolymers as aforesaid generally having a density between 0.90 and 0.94, preferably between 0.91 and 0.93. Suitably the higher olefin is a $C_4$ to $C_{10}$ olefin, preferably a $C_4$ to $C_8$ olefin, such as butene, hexene or octene.

Fluorocarbon polymers (ii) which are useful in this invention are described in U.S. Patent 3,125,547. For optimum effectiveness, such polymers should have melt flow characteristics similar to those of the linear ethylene polymers; in particular, the fluorocarbon polymers (ii) should be solid when the linear ethylene polymers (i) are solid and fluid when the linear ethylene polymers are in the melt. Thus, the melting or softening point of the fluorocarbon polymer should be in the range of 120 to 300°C and preferably in the range of 150 to 250°C.

Monomers which are suitable for production of such polymers include vinylidene fluoride, vinyl fluoride, trifluoroethylene, tetrafluoroethylene and hexafluoropropylene. Both homopolymers and copolymers thereof are useful. Polymers of vinylidene fluoride are preferred with polyvinylidene fluoride being particularly preferred.

It is preferred that the fluorocarbon polymer (ii) comprises from 0.005 to 2.5, for example 2.0, weight percent of the composition, especially from 0.01 to 0.5 weight percent of the composition.

The polyalkylsiloxanes (iii) may consist substantially of a poly methyl higher alkyl siloxane or may include a major proportion, typically greater than 50 weight percent, of methyl higher alkyl siloxane units and a minor proportion of other siloxane units such as dimethylsiloxane units. The higher alkyl group in (iii) is preferably a $C_6$ to $C_{18}$ alkyl group.

Polyalkylsiloxanes of this kind are commercially available and a poly(methyl octyl siloxane) was found to be suitable in the performance of the present invention. Generally, the polyalkylsiloxane contains 30 or more alkylsiloxane units; for example from 30 to 100 units. Molecular weights from 5,000 to 11,000 are considered suitable.

The fluorocarbon polymer (ii) and the polyalkylsiloxane (iii) are used in small amounts; generally each is incorporated in an amount from 0.01 to 0.5 weight percent of the composition. Equal proportions of these components have been found to be suitable and, although the proportions of (ii) and (iii) may vary widely within the weight percent ranges disclosed, it is preferred that the proportion of the fluorocarbon polymer to the polyalkylsiloxane is in the range of 0.2:1 to 5:1.

The fluorocarbon polymer and the polyalkylsiloxane can be blended with the linear ethylene polymer in any suitable manner. It has been found to be advantageous to prepare a masterbatch containing the linear ethylene polymer which is rich in both the fluorocarbon polymer and the polyalkylsiloxane for blending with additional ethylene polymer to achieve the desired concentration of the additives.

This invention also provides a process for extruding a linear ethylene polymer, which process comprises incorporating in the linear ethylene polymer prior to extrusion a fluorocarbon polymer, having a fluorine to carbon atomic ratio of at least 1:2, which is fluid at temperature of between 120°C and 300°C and a polyalkylsiloxane consisting of a major proportion of methyl higher alkyl siloxane units and a minor proporation, if any, of other siloxane units. Preferably, the extruder is a film extruder. It is preferred that the linear ethylene polymer, the fluorocarbon polymer and the poly alkylsiloxane are each as herein defined. This invention further provides a composition as aforesaid formed as a film.

The following Examples illustrate the invention. The linear low density polyethylene (LLDPE) used in both of the Examples and the control experiments was an ethylene-butene copolymer having a density of 0.918 and a melt index of 1; and which exhibits severe melt fracture under commercial narrow die gap extrusion conditions.

## EXAMPLE 1

A masterbatch was prepared by admixing the following components in a Brabender mixer at 180°C for 5 minutes.

| Components | % by Weight |
|---|---|
| Linear Low Density Ethylene-Butene-1 Copolymer | 91.0 |
| Kynar 760[1] | 2.0 |
| Poly(methyl-octyl-siloxane)[2] | 2.0 |
| Superfloss[3] | 5.0 |

[1] A high viscosity polyvinylidene fluoride obtained from Pennwalt Corp.
[2] MW about 6,200 from Petrarch Systems, Inc.
[3] Finely divided diatomaceous earth obtained from Manville Corp.

The resultant blend, containing 2% by weight each of Kynar 760 and of poly(methyl octyl siloxane), was pelletized. 2.5 parts by weight of the above masterbatch was then diluted with 97.5 parts by weight of the LLDPE to give a composition containing 500 ppm of each of Kynar 760 and of poly(methyl octyl siloxane), and extruded into strands on a Brabender extruder equipped with a capillary die. The extrusion temperature was 200°C and the melt flow rate was about 10 g/min., which provided a shear rate of about 450 sec$^{-1}$. Reduction in melt fracture began after 6 minutes and the melt fracture was eliminated after 14 minutes. In addition, the head pressure dropped by 16% and the extruder operating power decreased by 18% at the end of the 30 minutes of extrusion.

## EXAMPLE 2

The concentration of the Kynar and poly(methyl octyl siloxane) were further reduced to 250 ppm each by dry blending 1.25 parts by weight of the above masterbatch with 98.75 parts by weight of the LLDPE. The extruder temperature was 201°C and the melt flow rate was about 10 g/min., which provided a shear rate of 450 sec$^{-1}$. Reduction in melt fracture began after 11 minutes and the melt fracture was eliminated after 26 minutes. In addition, the head pressure dropped by 11% and the extruder operating power decreased by 12% after 30 minutes of extrusion.

CONTROL EXPERIMENTS

The following control experiments were conducted under the same conditions as the Examples described above to show the clear advantage of this invention.

|  |  | Comments |
|---|---|---|
| Control A | LLDPE Only | Severe melt fracture, no reduction in head pressure and extruder power. |
| Control B | LLDPE + 500 ppm Poly(methyl-octyl-siloxane) | Severe melt fracture, no reduction in head pressure. |
| Control C | LLDPE + 500 ppm Kynar 760 | No reduction in extruder operating power. |

**Claims**

1. A composition which comprises (i) a linear ethylene polymer; (ii) a fluorocarbon polymer, having a fluorine to carbon atomic ratio of at least 1:2, which is fluid at a temperature from 120°C to 300°C; and (iii) a polyalkylsiloxane consisting of a major proportion of methyl higher alkyl siloxane units and a minor proportion, if any, of other siloxane units.

2. A composition according to claim 1 in which (i) comprises a copolymer of ethylene and a higher olefin having a density of 0.90 to 0.94.

3. A composition according to claim 2 in which the higher olefin is a $C_4$ to $C_{10}$ olefin.

4. A composition according to claim 2 or 3 in which the higher olefin is a butene, hexene or octene.

5. A composition according to any preceding claim in which (ii) comprises a vinylidene fluoride polymer.

6. A composition according to claim 5 in which (ii) is polyvinylidene fluoride.

7. A composition according to any preceding claim in which (ii) comprises from 0.005 to 2.5 weight percent of the composition.

8. A composition of according to claim 7 in which (ii) comprises from 0.01 to 0.5 weight percent of the composition.

9. A composition according to any preceding claim in which (iii) consists substantially of a poly methyl higher alkyl siloxane.

10. A composition according to any preceding claim in which the higher alkyl group in (iii) is a $C_6$ to $C_{18}$ alkyl group.

11. A composition according to any preceding claim in which the (iii) comprises from 0.01 to 0.5 weight percent of the composition.

12. A composition according to any preceding claim in which the weight ratio (ii):(iii) is from 0.2:1 to 5:1.

13. A process for extruding a linear ethylene polymer, which process comprises incorporating in the linear ethylene polymer prior to extrusion a fluorocarbon polymer, having a fluorine to carbon atomic ratio of at least 1:2, which is fluid at temperatures of between 120°C and 300°C and a poly alkylsiloxane consisting of a major proportion of methyl higher alkyl siloxane units and a minor proportion, if any, of other siloxane units.

14. A process according to claim 13 in which the extruder is a film extruder.

15. A process according to claim 13 or 14 in wich the linear ethylene polymer is defined in any of claims 2 to 4.

16. A process according to claim 13, 14 or 15 in which the fluorocarbon polymer is defined in any of claims 5 to 8 or 12.

17. A process according to any of claims 13 to 16 in which the polyalkylsiloxane is defined in any of claims 9 to 12.

18. A composition according to any of claims 1 to 12 formed as a film.